(19) Europäisches Patentamt / European Patent Office / Office européen des brevets

(11) **EP 2 237 028 B1**

(12) **EUROPEAN PATENT SPECIFICATION**

(45) Date of publication and mention
of the grant of the patent:
**20.09.2017 Bulletin 2017/38**

(51) Int Cl.:
***G01N 27/407*** (2006.01)

(21) Application number: **10250535.1**

(22) Date of filing: **22.03.2010**

(54) **Method of manufacturing a solid electrolyte gas sensor, and gas sensor**

Verfahren zur Herstellung eines festelektrolytischen Gassensors, und Gassensor

Procédé de fabrication de capteur de gaz à électrolyte solide, et capteur de gaz

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.03.2009 JP 2009085513**

(43) Date of publication of application:
**06.10.2010 Bulletin 2010/40**

(73) Proprietors:
• **NGK Insulators, Ltd.**
**Nagoya-City, Aichi Pref. 467-8530 (JP)**
• **NGK Ceramic Device Co., Ltd.**
**Aichi-Prefecture 485-8557 (JP)**

(72) Inventors:
• **Shindo Hiroyuki**
**Nagoya City,**
**Aichi-ken, 467-8530 (JP)**
• **Murai, Shin**
**Komaki,**
**Aichi 485-8557 (JP)**

(74) Representative: **Naylor, Matthew John et al**
**Mewburn Ellis LLP**
**City Tower**
**40 Basinghall Street**
**London EC2V 5DE (GB)**

(56) References cited:
**EP-A1- 1 912 064      DE-A1-102006 039 964
US-A- 5 271 821      US-A1- 2005 126 910**

## Description

BACKGROUND OF THE INVENTION

Field of the Invention

The present invention relates to a gas sensor formed using an oxygen ion conductive solid electrolyte, and a method of maufacturing a gas sensor.

Description of the Background Art

Conventionally, various measuring devices have been used for determining a concentration of a desired gas component in a measurement gas. For example, a NOx sensor formed using an oxygen ion conductive solid electrolyte such as zirconia ($ZrO_2$) has been known as a device of measuring a NOx concentration in a measurement gas such as a combustion gas (for example, see Japanese Patent Application Laid-Open No. 2006-284223 and Japanese Patent Gazette No. 3537983).

Generally, the following process is performed for calculating concentration of NOx gas in the measurement gas by using a NOx sensor with a sensor element of the so-called two-chambers-arranged-in-series structure including a first inner chamber (space) to be in communication with an external space through a first diffusion control part and a second inner chamber (space) to be in communication with the first inner chamber through a second diffusion control part, as disclosed in Japanese Patent Application Laid-Open No. 2006-284223 and Japanese Patent Gazette No. 3537983.

First, oxygen concentration of the measurement gas introduced into the first inner chamber is adjusted to be substantially constant by pumping action (pumping in and out oxygen) of a main pumping cell which is an electrochemical pumping cell, and then introduced to the second inner chamber. In the second inner chamber, the measurement gas is put into the sufficient low-oxygen partial pressure state by pumping out oxygen by pumping action of an auxiliary pumping cell, which is also an electrochemical pumping cell. NOx in the measurement gas in the above low-oxygen partial pressure state is reduced or decomposed in a measuring electrode having catalytic activity (NOx decomposition/reduction ability) provided in the second inner chamber. Then, NOx concentration in the measurement gas is determined on the basis of the linear relation between NOx concentration and a current value of a current (NOx output) generated when oxygen ion produced by those reduction or decomposition of NOx in the measuring electrode is pumped out by a measuring pumping cell which is also an electrochemical pumping cell.

In the NOx sensor described above, an electrode protection layer composed of porous ceramic including, e.g. alumina, is provided on an upper surface of the measuring electrode of the sensor element so as to cover the measuring electrode. The electrode protection layer is provided in order to effectively maintain the catalytic activity of the measuring electrode.

The electrode protection layer functions as a diffusion control part against the measurement gas flowing toward the measuring electrode in the second inner chamber since it is composed of porous ceramic. The porosity of the electrode protection layer greatly influences a diffusion resistance put on the measurement gas in the electrode protection layer. Accordingly, it is essential to adjust the porosity of the electrode protection layer accurately in order to ensure the stability of NOx output in the NOx sensor (suppress variations of the diffusion resistance in the measurement gas among individual units).

When the sensor element is manufactured by burning a laminated body of green sheets, the electrode protection layer is formed by burning a predetermined pattern printed on the green sheet with a corresponding paste material. In this case, in order to form the electrode protection layer having a desired porosity (or diffusion resistance), a pore-forming agent is added to the paste material with the amount corresponding to the desired porosity.

However, conventionally, there has been a problem that the variations of the diffusion resistance of the electrode protection layer were large among the individual units of the NOx sensors having the same amount of the pore-forming agent, and the quality of NOx output was extremely unstable. This means that the diffusion resistance and the porosity of the electrode protection layer were not accurately controlled in the conventional methods.

DE 10 2006 039964 describes a gas sensor with an electrode 1 covered by a porous ceramic protective coating 2. The coating itself is made up of three successive layers 3, 4, 5, each of differing porosity. The closer a layer is to the measurement electrode, the lower its porosity. The purpose of that arrangement is said to be prevention of silicon-based impurities clogging a 'normal' porous protective layer. By having a more porous outer layer, the pores are not clogged by silicon impurities, allowing measurement gas to pass to the inner, less porous layers. An alternative described is the use of a single protective layer which instead has a porosity gradient, again with porosity increasing with distance from the measurement electrode.

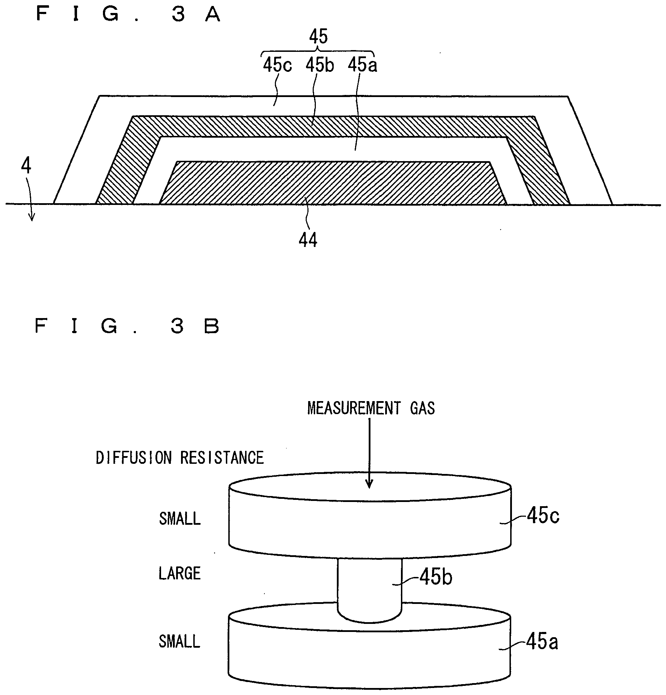

US 5,271,821 describes an oxygen sensor. The sensors described can be of generally cylindrical or plate-like shape. An inner electrode is used as reference, with an outer electrode being used for measurement. A porous protective coating has been used to protect the measurement electrode from damage. US 5,271,821 suggests adhering an oxide of Mg, Ca, Sr or Ba to the surface or the pores of the protective coating. This is said to reduce the problem of silicon poisoning of the sensor. Figs. 3b shows the cross section A-A of Fig. 3a. The central space (which the Examiner equates to the present "inner space") contains the reference electrode 2. Below it is a heater 8. On the top surface of the sensor depicted in Fig. 3b is the measurement electrode 3. It is coated with only two protective layers 6 and 7. The lower protective layer 6 is more dense than the upper protective layer 7, and has a smaller permeability of the gas to be measured than the latter.

US 2005/126910 describes a NOx sensor having a space including a measurement electrode. The measurement electrode 23 is covered by a porous protective layer 50, which is said to give the sensor a longer lifespan. US 2005/126910 does not describe use of several protective layers of differing porosity.

SUMMARY OF THE INVENTION

The present invention relates to a gas sensor formed using an oxygen ion conductive solid electrolyte and a manufacturing method thereof, and is particularly directed to a protection layer protecting a measuring electrode thereof.

According to an aspect of the present invention, a method of manufacturing a gas sensor including the steps of: a) preparing a plurality of ceramic green sheets; b) forming a predetermined pattern by printing on at least one of the plurality of ceramic green sheets, including the steps of: b-1) forming a measuring electrode pattern, the measuring electrode pattern being formed on one of the plurality of ceramic green sheets; and b-2) forming an electrode protection layer pattern on the measuring electrode pattern, the electrode protection layer pattern being formed by laminating at least three unit layer patterns; c) laminating the plurality of ceramic green sheets; and d) burning the laminated body obtained by the step c), wherein each of said at least three unit layer patterns is formed using a protection layer forming paste with ceramic powder mixed with a pore-forming agent in a predetermined ratio, and the ratio of the pore-forming agent in the protection layer forming paste used for forming both of a bottom layer and an uppermost layer of said at least three unit layer patterns is larger than that of the pore-forming agent in the protection layer forming paste used for forming other layers of said at least three unit layer patterns.

Thereby, in the gas sensor, an electrode protection layer or a porous layer provided on an electrode includes a laminated structure of three-layers, and in addition, the porosity of both of a bottom layer and an uppermost layer is larger than that of other layers in the laminated structure. This allows to obtain the gas sensor that the diffusion resistance in the electrode protection layer or the porous layer is preferably controlled.

According to another aspect of the present invention, a gas sensor measuring a current flowing in an electrochemical pumping cell so as to specify concentration of a gas component as a measuring object in a measurement gas, includes: an inner space that the measurement gas is introduced; a first electrode provided to the inner space, the first electrode having reduction ability or decomposition ability with respect to the gas component as a measuring object in the measurement gas; a second electrode; an oxygen ion conductive solid electrolyte provided at least between the first electrode and the second electrode; an electrochemical pumping cell configured to include the first electrode, the second electrode, and the oxygen ion conductive solid electrolyte, the electrochemical pumping cell pumping out oxygen generated in the first electrode by reduction or decomposition of the gas component as a measuring object from the second electrode; and an electrode protection layer provided on the first electrode and protecting the first electrode, the electrode protection layer having a laminated structure of at least three unit layers composed of porous ceramic, wherein the porosity of both of a bottom layer contacting the first electrode and an uppermost layer with a surface exposed to the inner space out of said at least three unit layers is larger than that of other layers of said at least three unit layers.

Thereby, in the gas sensor, the electrode protection layer or the porous layer having the laminated structure of three-layers is formed on the electrode, and in addition, the porosity of both of the bottom layer and the uppermost layer is larger than that of the other layers. This allows to obtain the gas sensor that the diffusion resistance in the electrode protection layer or the porous layer is preferably controlled.

It is therefore an object of the present invention to provide a gas sensor that the diffusion resistance of an electrode protection layer is preferably controlled, and a method of manufacturing the gas sensor capable of accomplishing this.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a cross sectional diagram schematically showing a configuration of an end part of a NOx sensor 100 including a sensor element 101 according to a preferred embodiment;
FIG. 2 is a view showing a flow of a process in manufacturing the sensor element 101;
FIGS. 3A and 3B are views showing a configuration of an electrode protection layer 45;
FIG. 4 is a view showing a sectional SEM image of each layer of the electrode protection layer 45;
FIG. 5 is a view showing a list of a ratio of a pore-forming agent in each layer and a calculation result of diffusion resistance with respect to sensor elements according to an example and a comparative example.

## DESCRIPTION OF THE PREFERRED EMBODIMENTS

<Configuration of NOx Sensor>

<NOx Sensor>

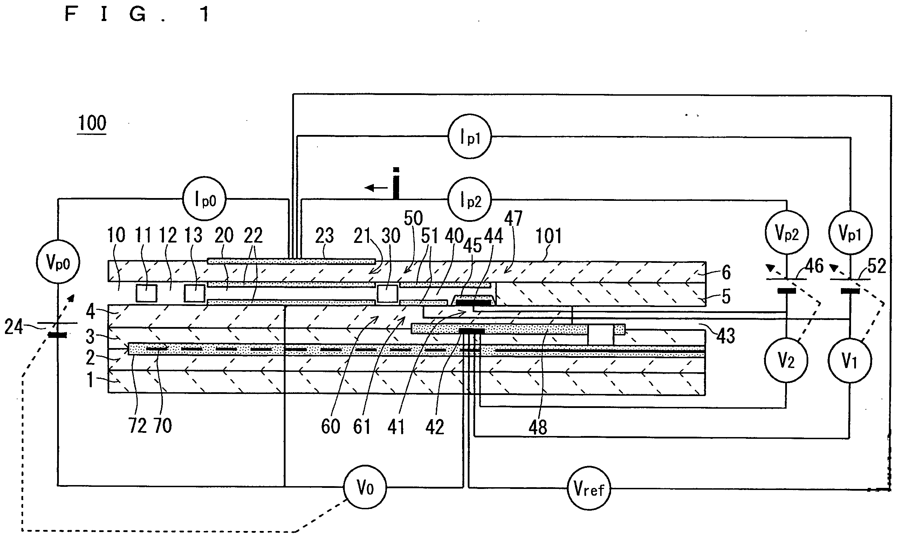

FIG. 1 is a cross sectional diagram schematically showing a configuration of an end part of a NOx sensor 100 including a sensor element 101 according to a preferred embodiment of the invention. The NOx sensor 100 detects predetermined nitrogen oxide (NOx) in a gas (measurement gas) to be a measurement object, and further measures its concentration. The NOx sensor 100 includes the sensor element 101 composed of an oxygen ion conductive solid electrolyte such as zirconia (ZrO$_2$).

Specifically, the sensor element 101 has a structure that six layers of a first substrate layer 1, a second substrate layer 2, a third substrate layer 3, a first solid electrolyte layer 4, a spacer layer 5, and a second solid electrolyte layer 6 are laminated in this order from a bottom as seen in FIG. 1, each of the layers being composed of an oxygen ion conductive solid electrolyte.

A gas inlet 10, a first diffusion control part 11, a buffer space 12, a second diffusion control part 13, a first inner space 20, a third diffusion control part 30 and a second inner space 40 are adjacently formed in this order to be in communication with one another between a lower surface of the second solid electrolyte layer 6 and an upper surface of the first solid electrolyte layer 4 at one end of the sensor element 101. The gas inlet 10, the buffer space 12, the first inner space 20 and the second inner space 40, which are provided by hollowing out the spacer layer 5, form an inner space with an upper portion sectioned by the lower surface of the second solid electrolyte layer 6, a lower portion sectioned by the upper surface of the first solid electrolyte layer 4, and a side portion sectioned by a side surface of the spacer layer 5. Each of the first diffusion control part 11, the second diffusion control part 13, and the third diffusion control part 30 is provided as two horizontally long slits (with an opening having a longitudinal direction in a direction perpendicular to Figure). A part from the gas inlet 10 to the second inner space 40 is referred to as a gas distribution part.

A reference gas inlet space 43 is provided between an upper surface of the third substrate layer 3 and a lower surface of the spacer layer 5, and located at a position which is more distanced from the end of the sensor element 101 than the gas distribution part is. The reference gas inlet space 43 forms an inner space with an upper portion sectioned by the lower surface of the spacer layer 5, a lower portion sectioned by the upper surface of the third substrate layer 3, and a side portion sectioned by a side surface of the first solid electrolyte layer 4. For example, air is introduced to the reference gas inlet space 43 as a reference gas.

The gas inlet 10 is open to an external space, and the measurement gas is brought into the sensor element 101 from the external space therethrough.

The first diffusion control part 11 provides a predetermined diffusion resistance to the measurement gas brought into from the gas inlet 10.

The buffer space 12 is provided in order to counteract concentration fluctuation of the measurement gas caused by pressure fluctuation (pulsation of exhaust pressure if a measurement gas is an emission gas of automobiles) of the measurement gas in the external space.

The second diffusion control part 13 provides a predetermined diffusion resistance to the measurement gas brought into the second diffusion control part 13 from the buffer space 12.

The first inner space 20 is provided as a space for controlling oxygen partial pressure in the measurement gas introduced through the second diffusion control part 13. The oxygen partial pressure is controlled by operating a main pumping cell 21.

The main pumping cell 21 is an electrochemical pumping cell composed of an inside pumping electrode 22 provided on almost entire surfaces of the lower surface of the second solid electrolyte layer 6 facing the first inner space 20 and an upper surface of the spacer layer 5, an outside pumping electrode 23 provided in a region opposing to the inside pumping electrode 22 on an upper surface of the second solid electrolyte layer 6 to be exposed to the external space, and an oxygen ion conductive solid electrolyte interposed between those electrodes. The inside pumping electrode 22 and the outside pumping electrode 23 are formed as porous cermet electrodes (e.g. cermet electrodes composed of ZrO$_2$, and a noble metal including Au of 0.01 to 0.95 wt%) which are oblong in a plane view. Further, the inside pumping electrode 22 is formed using material having low reduction ability, or no reduction ability with respect to the NO component in the measurement gas. That is, the inside pumping electrode 22 is provided as a low NO reduction ability pumping electrode that the reduction ability to the NO component is suppressed.

In the main pumping cell 21, a variable power source 24 provided outside the sensor element 101 applies a pumping voltage Vp0 to apply a pumping current Ip0 between the inside pumping electrode 22 and the outside pumping electrode 23 in a positive direction or a negative direction, allowing to pump out oxygen in the first inner space 20 to the external space or to pump in oxygen in the external space into the first inner space 20.

The sensor element 101 includes a first oxygen partial pressure detecting sensor cell 60 that is an electrochemical sensor cell composed of the inside pumping electrode 22, a reference electrode 42 interposed between an upper surface of the third substrate layer 3 and the first solid electrolyte layer 4, and the oxygen ion conductive solid electrolyte interposed between those electrodes. The reference electrode 42 is a porous cermet electrode that is substantially oblong in a plain view. The reference electrode 42 is surrounded by an air induction layer 48 composed of porous alumina leading to a reference gas inlet space 43, introducing a reference gas (air) of the reference gas inlet space 43 to the surface of the reference electrode 42. In the first oxygen partial pressure detecting sensor cell 60, an electromotive force V0 is produced between the inside pumping electrode 22 and the reference electrode 42 due to the difference of oxygen concentration between the atmosphere of the first inner space 20 and a reference gas (air) of the reference gas inlet space 43.

In the sensor element 101, the electromotive force V0 produced in the first oxygen partial pressure detecting sensor cell 60 is used for feedback controlling the variable power source 24 of the main pumping cell 21. Thereby, the pumping voltage Vp0 applied to the main pumping cell 21 by the variable power source 24 is controlled in accordance with the oxygen partial pressure in the atmosphere of the first inner space 20. In the sensor element 101 according to the present preferred embodiment, the pumping voltage Vp0 applied to the main pumping cell 21 by the variable power source 24 is controlled so as to set the oxygen partial pressure in the atmosphere of the first inner space 20 at a predetermined value that is lower enough to be able to control the oxygen partial pressure in the second inner space 40.

The third diffusion control part 30 provides a predetermined diffusion resistance to the measurement gas brought into the second inner space 40 from the first inner space 20.

The second inner space 40 is provided as a space for performing a process to measure concentration of nitrogen oxide (NOx) in the measurement gas introduced through the third diffusion control part 30.

Oxygen partial pressure is previously controlled in the first inner space 20, and thereafter, the oxygen partial pressure in the measurement gas introduced through the third diffusion control part 30 is further controlled in the second inner space 40 by an auxiliary pumping cell 50. Accordingly, the NOx sensor 100 is allowed to perform the measurement of a NOx concentration with high accuracy.

The auxiliary pumping cell 50 is an auxiliary electrochemical pumping cell including an auxiliary pumping electrode 51 provided on a substantially entire surface in the lower surface of the second solid electrolyte layer 6 facing the second inner space 40 and a part of the spacer layer 5, the outside pumping electrode 23, and the oxygen ion conductive solid electrolyte interposed between those electrodes. Similarly to the inside pumping electrode 22, the auxiliary pumping electrode 51 is formed using material having low reduction ability, or no reduction ability with respect to the NO component in the measurement gas. Thus, the auxiliary pumping electrode 51 is provided as a low NO reduction ability pumping electrode that the reduction ability to the NO component is suppressed.

In the auxiliary pumping cell 50, a variable power source 52 provided outside the sensor element 101 applies a pumping voltage Vp1 to apply a pumping current Ip1 between the outside pumping electrode 23 and the auxiliary pumping electrode 51 in a positive direction so as to pump out oxygen in the second inner space 40 into the external space.

The sensor element 101 includes a second oxygen partial pressure detecting sensor cell 61 that is an electrochemical sensor cell composed of the auxiliary pumping electrode 51, the reference electrode 42, and the oxygen ion conductive solid electrolyte interposed between those electrodes. In the second oxygen partial pressure detecting sensor cell 61, an electromotive force V1 is produced between the auxiliary pumping electrode 51 and the reference electrode 42 due to the difference of oxygen concentration between the atmosphere of the second inner space 40 and the reference gas (air) of the reference gas inlet space 43.

In the sensor element 101, the electromotive force V1 produced in the second oxygen partial pressure detecting sensor cell 61 is used for feedback controlling a variable power source 46 of the auxiliary pumping cell 50. Thereby, the pumping voltage Vp1 applied to the auxiliary pumping cell 50 by the variable power source 52 is controlled in accordance with the oxygen partial pressure in the atmosphere of the second inner space 40. In the sensor element 101 according to the present preferred embodiment, the pumping voltage Vp1 applied to the auxiliary pumping cell 50 by the variable power source 52 is controlled so as to set the oxygen partial pressure in the atmosphere of the second inner space 40 at a predetermined value that is lower enough to be able to control the oxygen partial pressure in the second inner space 40 to the extent substantially not to affect the measurement of NOx concentration.

Further, the sensor element 101 includes a measuring sensor cell 41 and the measuring pumping cell 47. The measuring sensor cell 41 is an electrochemical sensor cell including a measuring electrode 44, the reference electrode 42, and the oxygen ion conductive solid electrolyte interposed between those electrodes. The measuring pumping cell 47 is an electrochemical pumping cell including the outside pumping electrode 23, the measuring electrode 44, and the oxygen ion conductive solid electrolyte interposed between those electrodes.

The measuring electrode 44 is a porous cermet electrode, which is substantially oblong in a plain view. The measuring electrode 44 is composed of porous cermet of zirconia, and a metal reducing NOx to be a measurement gas component. An example is a metal component including Pt as a main component to which Rh is added. Thus, the measuring electrode 44 also serves as a NOx reduction catalyst for reducing NOx in the atmosphere of the second inner space 40.

Moreover, the measuring electrode 44 is covered with the electrode protection layer 45. The electrode protection layer 45 is a porous alumina layer, and provided in order to allow the measuring electrode 44 to keep the catalytic activity effectively by limiting the amount of NOx flowing into the measuring electrode 44. In other words, the electrode protection layer 45 is a part providing a predetermined diffusion resistance to the measurement gas introduced to the measuring electrode 44. The details of the electrode protection layer 45 will be described later.

In the measuring electrode 44, oxygen is generated by reducing or decomposing NOx in the measurement gas by the catalytic activity of the measuring electrode 44. Thereby, an electromotive force V2 is produced between the measuring electrode 44 and the reference electrode 42 in the measuring sensor cell 41. On the basis of the electromotive force V2, the variable power source 46 of the measuring pumping cell 47 provided outside the sensor element 101 is feedback controlled, so that the pumping voltage Vp2 applied to the measuring pumping cell 47 by the variable power source 46 is controlled in accordance with the oxygen partial pressure of the oxygen generated in the measuring electrode 44. In the sensor element 101 according to the present preferred embodiment, a current (NOx current) Ip2 flowing in the measuring pumping cell 47 at that time is detected to obtain NOx concentration in the measurement gas on the basis of this current Ip2 being substantially proportional to the NOx concentration in the measurement gas.

In the sensor element 101, oxygen partial pressure outside the sensor element 101 is obtained by measuring an electromotive force $V_{ref}$ produced between the outside pumping electrode 23 and the reference electrode 42.

The sensor element 101 further includes a heater 70 formed to be interposed between the second substrate layer 2 and the third substrate layer 3 from above and below. The heater 70 generates heat by power feeding from outside through a heater electrode not shown provided on a lower surface of the first substrate layer 1. Oxygen ion conductivity of solid electrolyte composing the sensor element 101 is enhanced by heat generation by the heater 70. The heater 70 is buried over the entire area from the first inner space 20 to the second inner space 40 so that a predetermined area of the sensor element 101 is heated and kept warm at a predetermined temperature. A heater insulating layer 72 composed of alumina and the like is formed on an upper and lower surfaces of the heater 70 in order to obtain electronic insulation between the second substrate layer 2 and the third substrate layer 3 (hereinafter, the heater 70, the heater electrode and the heater insulating layer 72 are collectively referred to as a heater part).

In the NOx sensor 100 according to the present preferred embodiment, as described above, the measuring electrode 44 is provided with the measurement gas having the oxygen partial pressure constantly maintained at a fixed low value (a value substantially not affecting the measurement of NOx) by operating the main pumping cell 21 and the auxiliary pumping cell 50. Then, a pumping current is applied to the measuring pumping cell 47 in accordance with the electromotive force produced in the measuring sensor cell 41 by generating oxygen by reduction or decomposition of NOx in the measuring electrode 44. This pumping current is substantially proportional to the NOx concentration. As a result, NOx concentration in the measurement gas is obtained.

<Manufacturing Process of Sensor Element>

Next, a process of manufacturing the sensor element 101 having the above configuration will be described. In the present preferred embodiment, the sensor element 101 is manufactured by forming a laminated body composed of a plurality of green sheets including oxygen ion conductive solid electrolyte such as zirconia as a ceramic component with predetermined patterns formed thereon, cutting and burning this laminated body.

Hereinafter, an example of manufacturing the sensor element 101 composed of the six layers shown in FIG. 1 will be described. In this case, six green sheets are prepared so as to correspond to the first substrate layer 1, the second substrate layer 2, the third substrate layer 3, the first solid electrolyte layer 4, the spacer layer 5, and the second solid electrolyte layer 6.

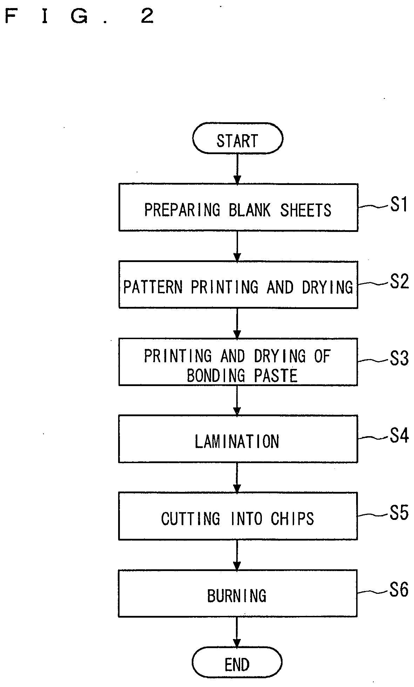

FIG. 2 is a view showing a flow of a process in manufacturing the sensor element 101. When the sensor element 101 is manufactured, blank sheets (not shown) to be green sheets, on which patterns are not formed, are prepared (step S1). When the sensor element 101 composed of six layers is manufactured, six blank sheets are prepared so as to correspond to each layer of the sensor element 101. The blank sheets are provided with a plurality of sheet holes used for positioning in printing and in laminating. These sheet holes are previously provided on the blank sheets before forming patterns by punching with a punching machine and the like. For green sheets corresponding to layers composing an inner space, a penetrated part corresponding to the inner space is previously provided similarly by punching. It should be noted that a thickness of each blank sheet corresponding to each layer of the sensor element 101 is not necessarily same with each other.

After preparing the blank sheets corresponding to each layer, the pattern printing and drying process are performed so as to form various patterns on each of the blank sheets (step S2). Specifically, electrode patterns such as the inside pumping electrode 22, the outside pumping electrode 23, the reference electrode 42, the measuring electrode 44, the auxiliary pumping electrode 51 are formed, and the electrode protection layer 45, the air induction layer 48, and inner wirings not shown are also formed. For the first substrate layer 1, cutting marks to be references of cutting positions in cutting the laminated body in the subsequent processes are also printed thereon.

Each pattern is printed by applying a pattern forming paste prepared in accordance with characteristics required for each forming object on a blank sheet using a publicly known screen printing technology. Also, a publicly known drying process is available for the drying process after printing. A preferable example of the drying process is performed in an air atmosphere at a temperature from 75°C to 90°C, for example.

In the present preferred embodiment, the manner of forming the electrode protection layer 45 on the measuring electrode 44 is distinctive. The details will be described later.

After each electrode pattern is formed as described above, each pattern is tested whether it has been formed to have a desired thickness. It is preferable to use a laser hologage for the test. It is more preferable to use a laser hologage that a contact pin contacting a paste film operates automatically, or a laser hologage that a release operating the contact pin automatically moves up and down.

After printing the patterns, the printing and drying process of a bonding paste are performed for laminating and bonding each green sheet corresponding to each layer (step S3). For printing the bonding paste, the publicly known screen printing technology is available, and for the drying process after printing, the publicly known drying technology is available. The drying process is preferably performed in an air atmosphere at a temperature from 75°C to 90°C, for example.

Subsequently, the crimping process is performed for obtaining a single laminated body by laminating green sheets with the adhesive applied thereon in a predetermined order and crimping them with a predetermined temperature and pressure condition (step S4). Specifically, the green sheets to be lamination objects are held by a predetermined lamination jig not shown, being positioned in accordance with the sheet holes. Then, the green sheets are heated and pressurized together with the lamination jig by a lamination machine such as a known oil-hydraulic press machine. The pressure, temperature and time of heating and pressurizing depend on which laminating machine is used, and suitable conditions may be set for achieving preferable lamination.

Subsequently after obtaining the laminated body as described above, several parts of the laminated body are cut into individual units of the sensor element 101 (referred to as a chip) (step S5). The sensor element 101 having the aforementioned outline shape is generated by burning the cut-out chips under a predetermined condition (step S6). The cut-out chips are preferably burned in an air atmosphere at a temperature from 1350°C to 1400°C, for example. The sensor element 101 obtained in this manner is stored in a predetermined housing, and assembled into a main body (not shown) of the NOx sensor 100.

<Electrode Protection Layer>

FIGS. 3A and 3B are views showing a configuration of the electrode protection layer 45. FIG. 3A is a cross sectional view of the electrode protection layer 45, and FIG. 3B is a view conceptually showing a state of diffusion resistance in the electrode protection layer 45.

As shown in FIG. 3A, in the present preferred embodiment, the electrode protection layer 45 having a three-layers structure is formed on the measuring electrode 44 formed on the first solid electrolyte layer 4. Specifically, the electrode protection layer 45 has a structure of laminating a first layer 45a, a second layer 45b, and a third layer 45c from a side of the measuring electrode 44 in this order. These layers are formed, broadly speaking, such that the porosity of the first layer 45a or the third layer 45c is larger than that of other layers. Accordingly, as conceptually shown in FIG. 3B, the second layer 45b is formed to be the largest and to be the most difficult for the measurement gas to pass through. That is, the electrode protection layer 45 has a structure that the second layer 45b functions as a diffusion-controlling part.

The electrode protection layer 45 having the above three-layers structure is formed by preparing alumina paste material with the pore-forming agent, the amount of which is adjusted in accordance with the porosity to be achieved in each of the first layer 45a, the second layer 45b, and the third layer 45c, printing (printing with a ceramic green sheet to be the first solid electrolyte layer 4 as a base layer) and drying a pattern to be the measuring electrode 44, and thereafter repeatedly performing the printing with the alumina paste material prepared for each layer and the drying on the pattern. That is, printing for forming the first layer 45a, printing for forming the second layer 45b, and printing for forming the third layer 45c are sequentially performed using the alumina paste material prepared for each layer. For instance, paste films to be the first layer 45a, the second layer 45b, and the third layer 45c are formed by printing on a paste film for the measuring electrode 44 having a thickness of approximately from 20 $\mu$m to 30 $\mu$m such that a thickness of each layer is approximately more than a dozen $\mu$m. Then, the electrode protection layer 45 having the above-described structure is formed by removing the pore-forming agent in the paste film in the subsequent burning process.

The alumina paste material for use preferably includes alumina powder with average particle size of approximately 0.1 $\mu$m to 1.0 $\mu$m, and a pore-forming agent composed of silicon dioxide ($SiO_2$), magnesium oxide (MgO), and the like by 50 wt% of the total, and also includes a plasticizer by 5 wt%, an organic solvent with a boiling point of 200°C or more by 35 wt%, and an ethocel-containing or butyral-containing binder by 10 wt%. The ratio of the pore-forming agent to the total amount of the alumina powder and the pore-forming agent (hereinafter, referred to as the ratio of a pore-forming agent) is determined in various ways in accordance with the porosity to be achieved.

However, the ratio of a pore-forming agent in the first layer 45a and the third layer 45c is limited to the extent of 30 wt% or less. This is because when each layer is formed with the larger ratio of a pore-forming agent than this, the diffusion resistance in each layer is reduced and the variation of the porosity is increased. It should be noted that it is difficult to preferably obtain the alumina paste having such a ratio of a pore-forming agent in reality.

While it is preferable to determine the ratio of a pore-forming agent in the second layer 45b in the combinations with the ratio of a pore-forming agent in the first layer 45a and the third layer 45c in accordance with the diffusion resistance desired to be achieved in the electrode protection layer 45, in consideration of forming the second layer 45b in the manner that the measurement gas passes therethrough, the ratio of a pore-forming agent in the second layer 45b is desired to be 3 wt% or more.

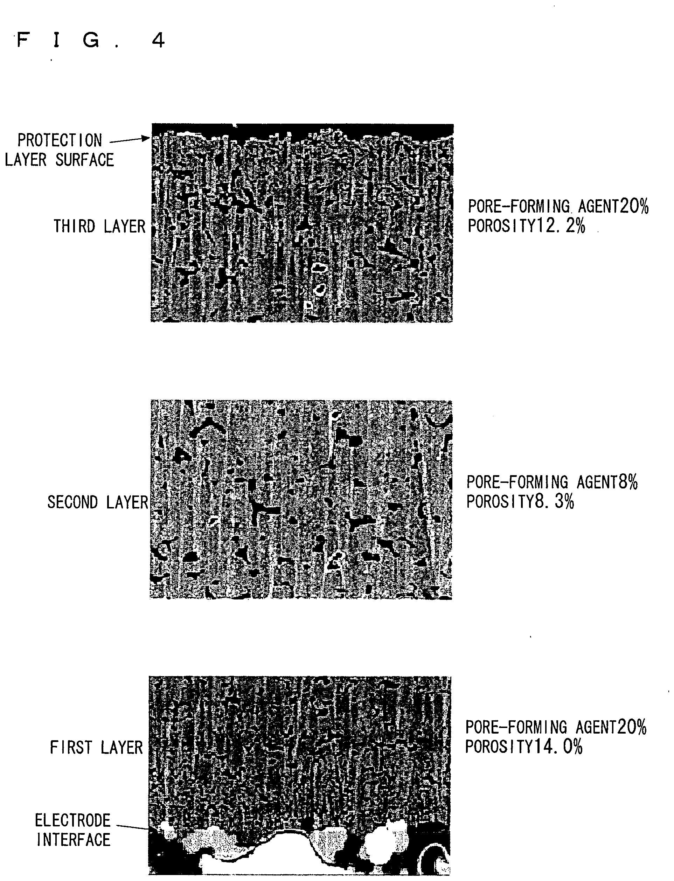

FIG. 4 is a view showing a sectional SEM image of each layer of the electrode protection layer 45 formed so as to set the ratio of a pore-forming agent in the first layer 45a, the second layer 45b, and the third layer 45c to be 20%, 8%, and 20%, respectively, as an example of the electrode protection layer 45 formed in the above manner. The black parts in the FIG. 4 indicate pores. The porosity of each layer approximately calculated from the area ratio of the pore parts in the layers shown by the SEM image is 14.0%, 8.3%, and 12.2% for the first layer 45a, the second layer 45b, and third layer 45c, respectively. FIG. 4 is nothing more than a result indicating that the electrode protection layer 45 having the three-layers structure with a different porosity for each layer is formed by differentiating the ratio of a pore-forming agent in the alumina paste for forming each layer.

By forming the electrode protection layer 45 to have the three-layers structure in this manner, in the sensor element 101 according to the present preferred embodiment, the diffusion resistance of the entire electrode protection layer 45 is preferably controlled to be within the values required for the sensor element 101. That is, the ratio of a pore-forming agent set for each layer of the electrode protection layer 45 is closely correlated with the diffusion resistance of the entire electrode protection layer 45 in the resultant sensor element 101. This makes possible to control the diffusion resistance of the electrode protection layer 45 in accordance with the settings of the ratio of a pore-forming agent. In other words, the three-layers structure is said to be a structure that is difficult to produce the variations of the diffusion resistance of the electrode protection layer 45 among the units of the sensor element 101. Therefore, the sensor element 101 according to the present preferred embodiment is configured such that the variation of the NOx current is controlled.

For instance, in order to set the diffusion resistance of the electrode protection layer 45 to be the values from 500/cm to 600/cm, the ratio of a pore-forming of the alumina paste used for forming the first layer 45a, the second layer 45b, and the third layer 45c is set to be 20%, 8%, and 20%, respectively, so that the sensor element 101 satisfying the requirement of the diffusion resistance is obtained with the high yield rate. The standard deviation of the diffusion resistance in this case is approximately 30/cm (see an example below). Alternatively, when the electrode protection layer 45 is formed so as to have the diffusion resistance of 900/cm, the ratio of a pore-forming agent of the alumina paste used for forming the first layer 45a, the second layer 45b, and the third layer 45c may be set to be 10%, 5%, and 10%, respectively (see the example). The standard deviation of the diffusion resistance in this case is approximately 20/cm (see the example). The inventors of the present invention have confirmed that there is no practical problem even if the variation of the diffusion resistance of approximately 100/cm is produced in the electrode protection layer 45 in view of the measurement accuracy of the NOx sensor 100 finally obtained.

The variation of the diffusion resistance of the electrode protection layer 45 is suppressed as described above. This is because the present preferred embodiment employs the structure of interposing the second layer 45b between the first layer 45a and the third layer 45c from above and below, the second layer 45b virtually limiting the diffusion of the measurement gas in the electrode protection layer 45, so that the major cause of the porosity fluctuation in the electrode protection layer 45 is suppressed by these first layer 45a and third layer 45c. That is, the first layer 45a and the third layer 45c have the functions to stabilize the porosity of the second layer 45b.

More specifically, in the first layer 45a contacting the measuring electrode 44, the porosity tends to increase particularly near the interface with the measuring electrode 44 due to slight differences of shrinkage of the first layer 45a and the measuring electrode 44 in burning. On the surface of the third layer 45c, the porosity tends to increase particularly near the surface thereof due to the influence of water vapor in the atmosphere of burning. These tendencies of the porosity increase are likely to appear as the targeted porosity is smaller (that is, as the ratio of a pore-forming agent is smaller), but the degree of the porosity fluctuation varies among the units and is difficult to predict. However, in the present preferred embodiment, as described above, by providing the first layer 45a and the third layer 45c such that the porosities of those are larger than that of the second layer 45b, the influence of the cause of the porosity increase is suppressed so that the second layer 45b is not affected thereby.

The cause of the porosity increase in the first layer 45a and the cause of the porosity increase in the third layer 45c are independent from each other. Thus, as described above, when the electrode protection layer 45 is formed such that only either one of those layers has the larger porosity, the cause of the porosity increase in only one of the layers is suppressed. Therefore, this is only limited comparing to the case where the porosities of both layers are increased at the same time (as in the present invention), but still produces the effect to suppress the diffusion resistance of the electrode protection layer 45. In this case, the porosities of the first layer 45a and the second layer 45b, or the porosities of the second layer 45b and the third layer 45c are to be same, so that these layers may be regarded as virtually one integrated layer. However, the electrode protection layer 45 can still be assumed to have the three-layers structure even in this case.

As described above, according to the present preferred embodiment, the NOx sensor that the diffusion resistance of the electrode protection layer is preferably controlled is obtained by configuring the electrode protection layer provided on the measuring electrode having NOx reduction ability or decomposition ability to have the laminated structure of three-layers and adjusting the amount of the pore-forming agent in the paste material used for forming the protection layer so as to make the porosity of both of the bottom layer and the uppermost layer larger than another layer in the sensor element of the NOx sensor.

<Variations>

While the electrode protection layer 45 has the laminated structure of three-layers in the above preferred embodiment, the electrode protection layer 45 may have the laminated structure of further more layers. Even in this case, the same effect as the above preferred embodiment is attained by making the porosity of both of the bottom layer contacting the measuring electrode 44 and the uppermost layer exposed to the second inner space larger than the other layer. Alternatively, the electrode protection layer may have either one of, or both of the configurations that the porosity is gradually decreased from the bottom layer toward the central layer and that the porosity is gradually increased from the central layer toward the uppermost layer.

[Examples]

As an example, a hundred sensor elements are manufactured for each of five different types of the sensor element 101 under the same condition other than the various combinations of the ratio of a pore-forming agent in the alumina paste used for forming the first layer 45a, the second layer 45b, and the third layer 45c. As a comparative example, a hundred sensor elements are manufactured for each of three different types of the sensor element 101 such that each of the ratio of a pore-forming agent in the alumina paste used for forming the first layer 45a, the second layer 45b, and the third layer 45c is same or the ratio of a pore-forming agent in the second layer 45b is the largest.

The alumina paste for use includes alumina powder with average particle size of approximately 0.1 $\mu$m to 1.0 $\mu$m, silicon dioxide (SiO$_2$), magnesium oxide (MgO), and the like as the pore-forming agent by 50 wt% of the total, and also includes a plasticizer by 5 wt%, butylcarbitol as an organic solvent by 35 wt%, and polyvinyl butyral resin as a binder by 10 wt%.

The diffusion resistance of the electrode protection layer 45 is obtained for each sensor element. At that time, a limiting current is measured in the air atmosphere by making use of the following relational expression (an expression of a limiting current) between a diffusion resistance R (/cm) and a limiting current I (A). It should be noted that the diffusion resistance R is established by a diffusion path length/a diffusion path sectional area.

$$R = 4FD\,(Po - Pe)/(IRT)\ldots(\text{Expression 1})$$

F indicates the Faraday constant of 96490 C/mol and D indicates a diffusion coefficient of 1.68 cm$^2$/sec. Po is an oxygen partial pressure in the measurement gas to be 0.21 atm because the air atmosphere is used. Pe is set to be 0 atm because the limiting current is obtained (all the oxygen is to be decomposed). R is a gas constant of 82.05 atm·cm$^3$/mol·K, and T is an atmosphere temperature of 1073K.

Hereinafter, the diffusion resistances R of the first diffusion control part 11, the second diffusion control part 13, the third diffusion control part 30, and the electrode protection layer 45 are indicated as R1, R2, R3, and R4, respectively.

Specifically, the diffusion resistance is obtained by the following procedure.

(1) The pumping voltage Vp1 and the pumping current Ip1 are sequentially measured with the electromotive force V1 being changed so as to obtain a limiting current I1 of the pumping current Ip1.
(2) The resultant limiting current I1 is assigned to the expression 1 so as to obtain a value corresponding to the sum of (R1 + R2 + R3).
(3) The pumping voltage Vp2 and the pumping current Ip2 are sequentially measured with the electromotive force V1 being changed so as to obtain a limiting current I2 of the pumping current Ip2.
(4) The resultant limiting current I2 is assigned to the expression 1 so as to obtain a value corresponding to the sum of (R1 + R2 + R3 + R4).
(5) A value R4 of the diffusion resistance R of the electrode protection layer 45 is obtained by subtracting the value obtained in (2) from the value obtained in (4).

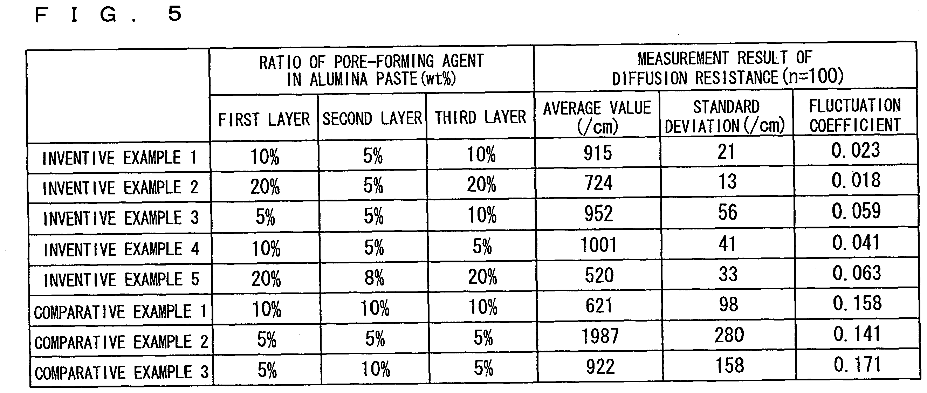

FIG. 5 is a view showing a list of the ratio of a pore-forming agent in each layer and the calculation result of diffusion resistance (an average value of the diffusion resistance, standard deviation, and fluctuation coefficient, with respect to a hundred sensor elements) with respect to sensor elements according to the example and the comparative example.

The result shown in FIG. 4 was obtained by taking a sectional SEM image of each layer for the sensor elements according to an example 2.

Comparing the examples to the comparative examples in the result shown in FIG. 5, the fluctuation coefficient of the examples where the ratio of a pore-forming agent of at least either one of the first layer and the third layer is larger than that of other layers is found to be significantly smaller than any of the comparative examples where the ratios of a pore-forming agent of the three-layers are same or the ratio of a pore-forming agent of the second layer is larger than other layers. FIG. 4 indicates that the large and small relation of the ratio of a pore-forming agent in forming the first layer and the third layer is correlated with the large and small relation of the porosity actually formed. Although Figures are not shown, the large and small relation has been identified between the ratio of a pore-forming agent and the porosity of each layer even for other examples in a similar way.

From above, the inventors of the present invention have confirmed that the variation of the diffusion resistance of the electrode protection layer was preferably suppressed by forming the electrode protection layer provided on the measuring electrode so as to have the three-layers structure and such that the ratio of a pore-forming agent of at least either one of the first layer and the third layer is larger than that of other layers. The inventors of the present invention have also confirmed that the tendency of the large and small relation of the porosity of each of the three-layers corresponds to the large and small relation of the ratio of a pore-forming agent in forming each layer.

Comparing the examples 1 to 4 where each of the second layers has the same ratio of a pore-forming agent, the fluctuation coefficient of the examples 1 and 2 where the ratios of a pore-forming agent of both first and third layers are larger than that of the second layer is smaller than the examples 3 and 4 where the ratio of a pore-forming agent of either one of the first layer and the third layer is larger than that of the second layer. As a result, it is more effective in reducing the variation of the diffusion resistance when the ratios of a pore-forming agent of both layers are larger than that of another layer.

While the invention has been shown and described in detail, the foregoing description is in all aspects illustrative and not restrictive.

## Claims

1. A method of manufacturing a gas sensor (101), comprising the steps of:

   a) preparing a plurality of ceramic green sheets;
   b) forming a predetermined pattern by printing on at least one of said plurality of ceramic green sheets, including the steps of:

   b-1) forming a measuring electrode pattern, said measuring electrode pattern being formed on one of said plurality of ceramic green sheets; and
   b-2) forming an electrode protection layer pattern on said measuring electrode pattern;

   c) laminating said plurality of ceramic green sheets; and
   d) burning the laminated body obtained by said step c),

   **characterized in that** said electrode protection layer pattern is formed by laminating at least three unit layer patterns, and wherein
   each of said at least three unit layer patterns is formed using a protection layer forming paste with ceramic powder mixed with a pore-forming agent in a predetermined ratio, and
   the ratio of said pore-forming agent in said protection layer forming paste used for forming both of a bottom layer and an uppermost layer of said at least three unit layer patterns is larger than that of said pore-forming agent in said protection layer forming paste used for forming other layers of said at least three unit layer patterns.

2. The method according to claim 1,
   wherein three unit layer patterns are laminated as said at least three unit layer patterns in said step b-1).

3. A gas sensor (101) measuring a current flowing in an electrochemical pumping cell so as to specify concentration of a gas component as a measuring object in a measurement gas, the gas sensor (101) comprising:

   an inner space (40) that the measurement gas is introduced;
   a first electrode (44) provided to said inner space (40), said first electrode (44) having reduction ability or decomposition ability with respect to the gas component as a measuring object in said measurement gas;
   a second electrode (23);
   an oxygen ion conductive solid electrolyte (6) provided at least between said first electrode (44) and said second electrode (23);
   an electrochemical pumping cell (47) configured to include said first electrode (44), said second electrode (23), and said oxygen ion conductive solid electrolyte (6), said electrochemical pumping cell (47) pumping out oxygen generated in said first electrode (44) by reduction or decomposition of said gas component as a measuring object from said second electrode (23); and
an electrode protection layer (45) provided on said first electrode (44) and protecting said first electrode (44),
**characterized in that** said electrode protection layer (45) has a laminated structure of at least three unit layers (45a, 45b, 45c) composed of porous ceramic,
and wherein the porosity of both of a bottom layer (45a) contacting said first electrode (44) and an uppermost layer (45c) with a surface exposed to said inner space (40) out of said at least three unit layers (45a, 45b, 45c) is larger than that of other layers (45b) of said at least three unit layers (45a, 45b, 45c).

4. The gas sensor (101) according to claim 4, wherein said unit layers (45a, 45b, 45c) include three-layers.

5. The gas sensor (101) according to either one of claims 3 or 4, wherein
said gas sensor (101) is an NOx sensor, and said first electrode (44) has NOx decomposition ability or NOx reduction ability.

**Patentansprüche**

1. Verfahren zur Herstellung eines Gassensors (101), umfassend die folgenden Schritte:

   a) Herstellen einer Vielzahl von Keramikgrünlagen;
   b) Ausbilden einer vorbestimmten Struktur durch Bedrucken von mindestens einer aus der Vielzahl von Keramikgrünlagen, umfassend die folgenden Schritte:

      b-1) Ausbilden einer Messelektrodenstruktur, wobei die Messelektrodenstruktur auf einer aus der Vielzahl von Keramikgrünlagen ausgebildet wird; und
      b-2) Ausbilden einer Elekrodenschutzschichtstruktur auf der Messelektrodenstruktur;

   c) Laminieren der Vielzahl von Keramikgrünlagen; und
   d) Brennen des durch Schritt c) erhaltenen laminierten Körpers,

   **dadurch gekennzeichnet, dass** die Elektrodenschutzschichtstruktur durch Laminieren von mindestens drei Einheitsschichtstrukturen ausgebildet wird, und worin
   jede der mindestens drei Einheitsschichtstrukturen unter Anwendung einer Schutzschicht-bildenden Paste mit Keramikpulver, das mit einem porenbildenden Wirkstoff in einem vorbestimmten Verhältnis gemischt ist, ausgebildet wird, und
   der Anteil des porenbildenden Wirkstoffs in der Schutzschicht-bildenden Paste, der für das Ausbilden sowohl einer unteren Schicht als auch einer obersten Schicht der mindestens drei Einheitsschichtstrukturen angewandt wird, größer als derjenige des porenbildenden Wirkstoffs in der Schutzschicht-bildenden Paste, der für das Ausbilden anderer Schichten der mindestens drei Einheitsschichtstrukturen angewandt wird, ist.

2. Verfahren gemäß Anspruch 1,
worin drei Einheitsschichtstrukturen wie die mindestens drei Einheitsschichtstrukturen in Schritt b-1) laminiert werden.

3. Gassensor (101), der einen in einer elektrochemischen Pumpzelle fließenden Strom misst, um so die Konzentration einer Gaskomponente als ein Messobjekt in einem Messgas zu spezifizieren, wobei der Gassensor (101) Folgendes umfasst:

   einen inneren Raum (40), in den das Messgas eingebracht wird;
   eine erste Elektrode (44), die dem inneren Raum (40) bereitgestellt wird, wobei die erste Elektrode (44) eine Reduktionsfähigkeit oder eine Zersetzungsfähigkeit mit Bezug auf die Gaskomponente als ein Messobjekt in dem Messgas aufweist;
   eine zweite Elektrode (23);
   einen sauerstoffionenleitenden Festelektrolyten (6), der zumindest zwischen der ersten Elektrode (44) und der zweiten Elektrode (23) vorgesehen ist;
   eine elektrochemische Pumpzelle (47), die so konfiguriert ist, dass sie die erste Elektrode (44), die zweite Elektrode (23) und den sauerstoffionenleitenden Festelektrolyten (6) umfasst, wobei die elektrochemische Pumpzelle (47) den in der ersten Elektrode (44) durch Reduktion oder Zersetzung der Gaskomponente erzeugten Sauerstoff als ein Messobjekt aus der zweiten Elektrode (23) herauspumpt; und
   eine Elektrodenschutzschicht (45), die auf der ersten Elektrode (44) vorgesehen ist und diese erste Elektrode (44) schützt,
   **dadurch gekennzeichnet, dass** die Elektrodenschutzschicht (45) eine laminierte Struktur von mindestens drei Einheitsschichten (45a, 45b, 45c) aufweist, die aus poröser Keramik bestehen,
   und worin die Porosität sowohl einer unteren Schicht (45a), welche die erste Elektrode (44) berührt, als auch einer obersten Schicht (45c) mit einer dem inneren Raum (40) ausgesetzten Oberfläche aus den mindestens drei Einheitsschichten (45a, 45b, 45c) größer als diejenige von anderen Schichten (45b) der mindestens drei Einheitsschichten (45a, 45b, 45c) ist.

**4.** Gassensor (101) gemäß Anspruch 4, worin die Einheitsschichten (45a, 45b, 45c) drei Schichten umfassen.

**5.** Gassensor (101) gemäß einem der Ansprüche 3 oder 4, worin der Gassensor (101) ein NOx-Sensor ist, und die erste Elektrode (44) eine NOx-Zersetzungsfähigkeit oder eine NOx-Reduktionsfähigkeit aufweist.

**Revendications**

**1.** Procédé de fabrication d'un capteur de gaz (101), comprenant les étapes consistant à :

a) préparer une pluralité de feuilles vertes en céramique ;
b) former un motif prédéterminé par impression sur au moins une feuille de ladite pluralité de feuilles vertes en céramique, incluant les étapes consistant à :

b-1) former un motif d'électrode de mesure, ledit motif d'électrode de mesure étant formé sur une de ladite pluralité de feuilles vertes en céramique ; et
b-2) former un motif de couche de protection d'électrode sur ledit motif d'électrode de mesure ;

c) laminer ladite pluralité de feuilles vertes en céramique ; et
d) brûler le corps laminé obtenu à ladite étape c),

**caractérisé en ce que** ledit motif de couche de protection d'électrode est formé en laminant au moins trois motifs de couche unitaire, et dans lequel chacun desdits au moins trois motifs de couche unitaire est formé en utilisant une pâte formatrice de couche de protection avec une poudre de céramique mélangée à un agent formateur de pores selon un rapport prédéterminé, et le rapport dudit agent formateur de pores dans ladite pâte formatrice de couche de protection utilisée pour former à la fois une couche inférieure et une couche la plus haute desdits au moins trois motifs de couche unitaire est plus grand que celui dudit agent formateur de pores dans ladite pâte formatrice de couche de protection utilisée pour former d'autres couches desdits au moins trois motifs de couche unitaire.

**2.** Procédé selon la revendication 1,

dans lequel trois motifs de couche unitaire sont laminés en tant que lesdits au moins trois motifs de couche unitaire à ladite étape b-1).

**3.** Capteur de gaz (101) mesurant un courant circulant dans une cellule de pompage électrochimique afin de spécifier une concentration d'un composant gazeux en tant qu'objet de mesure dans un gaz de mesure, le capteur de gaz (101) comprenant :

un espace intérieur (40) dans lequel le gaz de mesure est introduit ;
une première électrode (44) agencée dans ledit espace intérieur (40), ladite première électrode (44) ayant une capacité de réduction ou une capacité de décomposition par rapport au composant gazeux en tant qu'objet de mesure dans ledit gaz de mesure ;
une seconde électrode (23) ;
un électrolyte solide conducteur d'ions oxygène (6) agencé au moins entre ladite première électrode (44) et ladite seconde électrode (23) ;
une cellule de pompage électrochimique (47) configurée pour inclure ladite première électrode (44), ladite seconde électrode (23), et ledit électrolyte solide conducteur d'ions oxygène (6), ladite cellule de pompage électrochimique (47) pompant de l'oxygène généré dans ladite première électrode (44) par réduction ou décomposition dudit composant de gaz en tant qu'objet de mesure provenant de ladite seconde électrode (23) ; et
une couche de protection d'électrode (45) agencée sur ladite première électrode (44) et protégeant ladite première électrode (44),
**caractérisé en ce que** ladite couche de protection d'électrode (45) a une structure laminée constituée d'au moins trois couches unitaires (45a, 45b, 45c) composées de céramique poreuse,
et dans lequel la porosité à la fois d'une couche inférieure (45a) venant au contact de ladite première électrode (44) et d'une couche la plus haute (45c) ayant une surface exposée audit espace intérieur (40) parmi lesdites trois couches unitaires (45a, 45b, 45c) est plus grande que celle d'autres couches (45b) desdits au moins trois couches unitaires (45a, 45b, 45c).

**4.** Capteur de gaz (101) selon la revendication 4, dans lequel lesdites couches unitaires (45a, 45b, 45c) incluent trois couches.

**5.** Capteur de gaz (101) selon l'une quelconque des revendications 3 ou 4, dans lequel ledit capteur de gaz (101) est un capteur de NOx, et ladite première électrode (44) a une capacité de décomposition de NOx ou une capacité de réduction

de NOx.

# F I G . 1

F I G . 2

```
         ┌─────────────┐
         │    START    │
         └──────┬──────┘
                │
                ▼
    ┌───────────────────────┐
    │ PREPARING BLANK SHEETS │────S1
    └───────────┬───────────┘
                │
                ▼
  ┌─────────────────────────────┐
  │ PATTERN PRINTING AND DRYING  │────S2
  └──────────────┬──────────────┘
                 │
                 ▼
   ┌──────────────────────────┐
   │   PRINTING AND DRYING OF  │────S3
   │      BONDING PASTE        │
   └─────────────┬────────────┘
                 │
                 ▼
     ┌─────────────────────┐
     │     LAMINATION       │────S4
     └──────────┬──────────┘
                │
                ▼
     ┌─────────────────────┐
     │  CUTTING INTO CHIPS  │────S5
     └──────────┬──────────┘
                │
                ▼
     ┌─────────────────────┐
     │      BURNING         │────S6
     └──────────┬──────────┘
                │
                ▼
         ┌─────────────┐
         │     END     │
         └─────────────┘
```

F I G . 3 A

45
45c  45b  45a

4

44

F I G .  3 B

MEASUREMENT GAS

DIFFUSION RESISTANCE

SMALL

45c

LARGE

45b

SMALL

45a

# F I G . 4

PROTECTION LAYER SURFACE

THIRD LAYER

PORE-FORMING AGENT20%
POROSITY12. 2%

SECOND LAYER

PORE-FORMING AGENT8%
POROSITY8. 3%

FIRST LAYER

ELECTRODE INTERFACE

PORE-FORMING AGENT20%
POROSITY14. 0%

# F I G . 5

| | RATIO OF PORE-FORMING AGENT IN ALUMINA PASTE (wt%) | | | MEASUREMENT RESULT OF DIFFUSION RESISTANCE (n=100) | | |
|---|---|---|---|---|---|---|
| | FIRST LAYER | SECOND LAYER | THIRD LAYER | AVERAGE VALUE (/cm) | STANDARD DEVIATION (/cm) | FLUCTUATION COEFFICIENT |
| INVENTIVE EXAMPLE 1 | 10% | 5% | 10% | 915 | 21 | 0. 023 |
| INVENTIVE EXAMPLE 2 | 20% | 5% | 20% | 724 | 13 | 0. 018 |
| INVENTIVE EXAMPLE 3 | 5% | 5% | 10% | 952 | 56 | 0. 059 |
| INVENTIVE EXAMPLE 4 | 10% | 5% | 5% | 1001 | 41 | 0. 041 |
| INVENTIVE EXAMPLE 5 | 20% | 8% | 20% | 520 | 33 | 0. 063 |
| COMPARATIVE EXAMPLE 1 | 10% | 10% | 10% | 621 | 98 | 0. 158 |
| COMPARATIVE EXAMPLE 2 | 5% | 5% | 5% | 1987 | 280 | 0. 141 |
| COMPARATIVE EXAMPLE 3 | 5% | 10% | 5% | 922 | 158 | 0. 171 |

EP 2 237 028 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006284223 A
- JP 3537983 B
- DE 102006039964
- US 5271821 A
- US 2005126910 A